(19) Europäisches Patentamt
European Patent Office
Office européen des brevets

(11) Veröffentlichungsnummer: **0 568 999 A1**

# (12) EUROPÄISCHE PATENTANMELDUNG

(21) Anmeldenummer: **93107305.0**

(22) Anmeldetag: **05.05.93**

(51) Int. Cl.⁵: **C08K 5/13**, C08L 29/14, C08J 5/18, C03C 27/12

(30) Priorität: **08.05.92 DE 4215141**

(43) Veröffentlichungstag der Anmeldung: **10.11.93 Patentblatt 93/45**

(84) Benannte Vertragsstaaten: **BE DE FR GB IT NL SE**

(71) Anmelder: **HOECHST AKTIENGESELLSCHAFT**

**D-65926 Frankfurt(DE)**

(72) Erfinder: **Gutweiler, Matthias, Dr.**
**Hintergasse 2**
**W-6204 Taunusstein 4(DE)**
Erfinder: **Hutten, Ulrich, Dr.**
**Philipp-Kremer-Strasse**
**W-6233 Kelkheim(DE)**
Erfinder: **Pfahler, Gerhard, Dr.**
**Karlsbaderstrasse 27**
**W-8900 Augsburg(DE)**
Erfinder: **Schindler, Hermann, Dr.**
**Rüdesheimerstrasse 77**
**W-6238 Wallau(DE)**

## (54) Polyvinylbutyrale mit verbesserter Thermostabilität und Lichtbeständigkeit.

(57) Polyvinylbutyrale (PVB-e) mit verbesserter Thermostabilität und gegebenenfalls verbesserter Lichtbeständigkeit, die als Stabilisatoren mehrkernige Phenole der Formel I, deren phenolische Reste in Parastellung zur phenolischen Hydroxylgruppe ein quartäres C-Atom aufweisen, gegebenenfalls in Kombination mit synergistisch wirkenden stickstoff-, schwefel- oder phosphorhaltigen Costabilisatoren der Typen a) bis d) enthalten und zusätzlich Lichtstabilisatoren, Weichmacher, weitere übliche Stabilisatoren, übliche Antihaftmittel und übliche Zusatzstoffe enthalten können. Verfahren zur Herstellung der stabilisierten PVB-e und deren Verwendung, vorzugsweise in plastifizierter Form, zur Herstellung von weichmacherhaltigen Folien durch thermoplastische Verformung. Verwendung der resultierenden vergilbungsarmen Folien als Zwischenschichtfolien mit deutlich reduzierter Gelbfärbung zur Herstellung von Verbundgläsern bzw. Glasverbunden aus silikatischen Glasscheiben.

EP 0 568 999 A1

Gegenstand der Erfindung sind stabilisatorhaltige Polyvinylbutyrale (PVB-e) mit Gehalten an Stabilisatoren aus mehrkernigen Phenolen, deren phenolische Reste in Parastellung zur phenolischen Hydroxylgruppe ein quartäres C-Atom aufweisen, sowie gegebenenfalls Gehalten an in Kombination mit den mehrkernigen Phenolen synergistisch wirkenden stickstoff-, schwefel- oder phosphorhaltigen Costabilisatoren oder Gemischen dieser Costabilisatoren und gegebenenfalls Gehalten an weiteren Stabilisatoren, vorzugsweise Lichtstabilisatoren, und gegebenenfalls Gehalten an weiteren üblichen Zusatzstoffen sowie gegebenenfalls Gehalten an Weichmachern. Verfahren zur Herstellung der stabilisatorhaltigen Polyvinylbutyrale und deren Verwendung, vorzugsweise nach erfolgter thermoplastischer Formgebung, insbesondere in plastifizierter Form als Zwischenschichtfolien mit verbesserter Thermostabilität, verminderter Vergilbung und verminderter Randverfärbung bei der Glasverbundherstellung sowie gegebenenfalls zusätzlich verbesserter Lichtstabilität.

Weichmacherhaltige Polyvinylbutyrale werden bekanntlich seit langem in großen Mengen thermoplastisch verarbeitet und insbesondere zu Folien extrudiert, die sich u. a. durch hervorragende mechanische Eigenschaften auszeichnen und als Zwischenschichten in mehrschichtigen Verbundgläsern, vorzugsweise für Fahrzeugglasscheiben, Architekturgläser für den Bausektor und Panzerglasscheiben, Verwendung finden.

Ein Nachteil der Polyvinylbutyrale (PVB-e) ist ihre im Vergleich zu anderen technisch verwendbaren Polymerisaten hohe Oxidationsempfindlichkeit, insbesondere in der Wärme, sowie ihre Unbeständigkeit bzw. Hydrolyseempfindlichkeit gegenüber Säuren. Zweckmäßigerweise werden PVB-e daher vor oder während ihrer, vorzugsweise thermoplastischen, Verarbeitung durch Zugabe von Antioxidantien, vorzugsweise Phenolen, stabilisiert und außerdem zur Verhinderung einer sauren Hydrolyse mit einer geringen Mengen Alkalihydroxid versetzt.

Da Folien aus plastifizierten PVB-en häufig eine zu starke Haftung an anorganischen Gläsern aufweisen, können dem PVB zur Herabsetzung dieser Haftungsfähigkeit vor oder bei der Herstellung der Folien haftungsvermindernde Substanzen, beispielsweise alkalisch reagierende Salze, wie z. B. Kaliumacetat, zugesetzt werden. Der Zusatz solcher alkalisch reagierenden Antihaftmittel sowie die bei der Extrusion anzuwendenden hohen Massetemperaturen von im allgemeinen ≧ 180 °C führen aber bekanntlich zu erheblich verfärbten plastifizierten PVB-Folien. Es sind daher bereits zahlreiche Versuche und Maßnahmen bekannt geworden, die eine Verminderung der Verfärbungen von PVB-Folien zum Ziel hatten. So ist aus der US-PS 3823113 die zusätzliche Stabilisierung von PVB durch ein Benzotriazolderivat bekannt. In der DE-PS 3347040 und der DE-OS 3228076 sind die Verwendung einer Kombination aus einem phenolischen Antioxydationsmittel und einem Phosphit für die PVB-Stabilisierung beschrieben. Es hat sich jedoch gezeigt, daß mit den in den vorstehend genannten Druckschriften beschriebenen Methoden nur geringe oder unbefriedigende Stabilisierungsresultate erzielt werden können, wobei insbesondere die PVB-Stabilisierung mit Phosphit unter Langzeitbedingungen problematisch sein kann. Bekanntlich neigen Phosphite unter Alkalieinwirkung zur Hydrolyse und damit zur Freisetzung von phosphoriger Säure, welche dann zum Abbau des PVB-s führen bzw. zu dessen Abbau beitragen kann.

Der primäre Stabilisator bei der PVB-Stabilisierung ist bekanntlich meist ein phenolisches Antioxidans, vorzugsweise ein sterisch gehindertes substituiertes Phenol. Aus der DE-PS 2208167 sind in der ortho-bzw. para-Stellung zur phenolischen OH-Gruppe substituierte Phenole dieser Art und deren Verwendung zur PVB-Stabilsierung bekannt, wobei allgemein einkernige Phenole, wie z. B. Isobornylxylenol oder 2,6-Ditertiärbutyl-4-methylphenol, eingesetzt werden.

Bei der Verwendung dieser Phenole, wie z. B. Isobornylxylenol, zur Stabilisierung von plastifizierten PVB-Folien, kommt es beim Einsatz der letzeren zur Verbundglasherstellung nach der üblichen Autoklavenmethode außerdem zu Randverfärbungen bei den fertigen Glasverbunden, was sehr unbefriedigend ist und häufig zu Verlusten führt.

Neben den einkernigen Phenolen sind auch mehrkernige Phenole von Interesse für die PVB-Stabilisierung, da sie gegenüber einkernigen Phenolen gewisse Eigenschaftsvorteile aufweisen. So sind sie infolge ihrer Molekülgröße weniger stark flüchtig und zeigen eine geringere Tendenz zur Migration an die Grenzflächen, was u. a. die Möglichkeit einer eventuellen Haftungsbeeinflussung der Folien an den Glasoberflächen von Glasverbunden vermindert. Bekanntlich haben bisher aber die Bemühungen zur Verwendung mehrkerniger Phenole als PVB-Stabilisatoren häufig zu nicht befriedigenden Ergebnissen geführt.

Der vorliegenden Erfindung lag somit die Aufgabe zugrunde, Stabilisatorsysteme für Polyvinylbutyralfolien verfügbar zu machen, welche die vorstehend beschriebenen Nachteile bekannter PVB-Stabilisatoren nicht aufweisen und außer einer Verbesserung der Vergilbungsverminderung bei der Herstellung von plastifizierten PVB-Folien vor allem auch die Herstellung von Glasverbunden ohne bzw. mit nur geringfügigen Randverfärbungen ermöglichen.

Dieses Ziel kann gemäß vorliegender Erfindung mit Polyvinylbutyralen (PVB-en) erreicht werden, die als Oxidationsstabilisatoren mehrkernige Phenole der nachstehend spezifizierten Formel I sowie gegebenenfalls zusätzlich bestimmte, mit den Phenolen der Formel I synergistisch wirkende Costabilisatoren und gegebenenfalls weitere Stabilisatoren, vorzugsweise Lichtstabilisatoren, sowie gegebenenfalls weitere übliche Zusatzstoffe und Weichmacher enthalten.

Gegenstand der Erfindung sind daher Polyvinylbutyrale (PVB-e), die verbesserte Thermostabilität und gegebenenfalls verbesserte Lichtbeständigkeit besitzen, mit Gehalten an phenolischen Oxidationsstabilisatoren und gegebenenfalls Lichtstabilisatoren und gegebenenfalls Weichmachern, dadurch gekennzeichnet, daß sie als phenolische Stabilisatoren mehrkernige Phenole der Formel I,

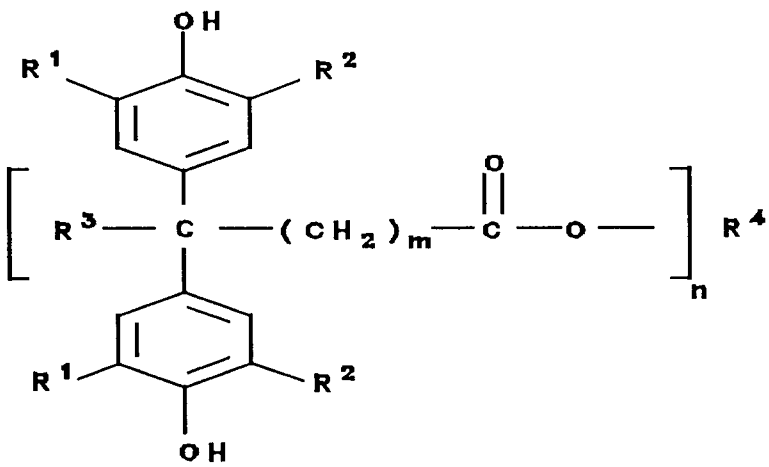

(I)

worin

R[1] und R[2], die gleich oder verschieden sein können,
= H, lineares oder verzweigtes ($C_1$-$C_8$)-Alkyl oder ($C_4$-$C_8$)-Cycloalkyl, vorzugsweise Cyclohexyl und vorzugsweise tert.-Butyl,
$R^3$ = H oder $-CH_3$,
$R^4$, das einbindig oder zweibindig, vorzugsweise linear und $\alpha$, $\omega$-zweibindig, sein kann,
= ($C_1$-$C_{18}$)-Alkyl wenn n = 1, oder $-C_pH_{2p}-$ mit p = 1 bis 8, vorzugsweise p = 2, wenn n = 2,
n = 1 oder 2, vorzugsweise 2, und
m = 1 bis 4

bedeutet, gegebenenfalls in Kombination mit synergistisch wirkenden stickstoffhaltigen, schwefelhaltigen oder phosphorhaltigen Costabilisatoren, vorzugsweise des Typs

a) Stickstoffhaltige Verbindungen der Formel II,

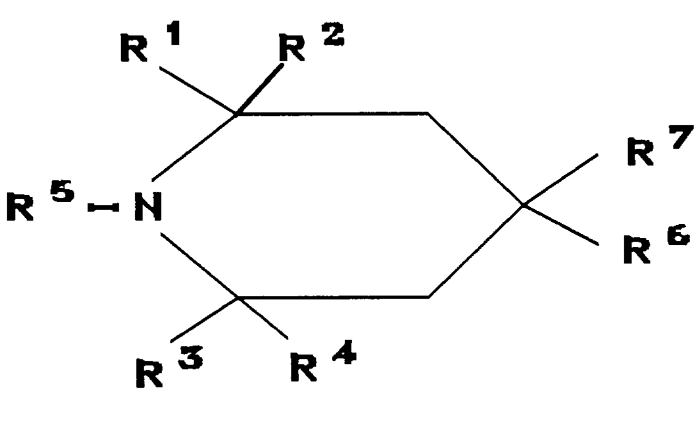

(II)

worin $R^1$, $R^2$, $R^3$, $R^4$, die gleich oder verschieden sein können,
= ($C_1$-$C_4$)-Alkyl, vorzugsweise Methyl, oder ($C_4$-$C_8$)-Cycloalkyl, vorzugsweise Cyclohexyl,
$R^5$ = H, ($C_1$-$C_{18}$)-Alkyl, ($C_1$-$C_{18}$)-Hydroxyalkyl, ($C_1$-$C_{18}$)-Alkoxy oder ($C_1$-$C_{18}$)-Acyloxy, vorzugsweise H,
$R^6$ und $R^7$, die gleich oder verschieden sein können und jeweils einer der Reste $R^6$ oder $R^7$ = H sein

kann, einen einbindigen organischen Rest mit 1 bis 30 C-Atomen, der ein oder mehrere Heteroatome, die verschieden sein können, sowie Epoxidgruppen enthalten kann, oder $R^6$ und $R^7$ gemeinsam mit dem C-Atom des Piperidinrings einen monocyclischen oder mehrfachcyclischen Rest mit bis zu 60 C-Atomen, der verzweigt sein kann und ein oder mehrere Heteroatome, die verschieden sein können, sowie Epoxidgruppen enthalten kann, bedeutet, ferner polymere oder copolymere Formen von Verbindungen der Formel II,

oder Costabilisatoren vorzugsweise des Typs

b) Stickstoffhaltige Verbindungen aus der Gruppe aliphatische Carbonsäurehydrazide bzw. Dicarbonsäuredihydrazide, vorzugsweise mit 2 bis 12 C-Atomen, insbesondere Adipinsäuredihydrazid, besonders bevorzugt Essigsäurehydrazid,

oder Costabilisatoren vorzugsweise des Typs

c) Schwefelhaltige Verbindungen aus der Gruppe Di-($C_4$-$C_{18}$)alkyl-sulfide und -disulfide, vorzugsweise Di-($C_8$-$C_{12}$)alkyl-sulfide und -disulfide, Thiozinnverbindungen der Formel $R_xSn(-S-CH_2-COOR)_y$, wobei $x + y = 4$, x, y = 1 bis 3, vorzugsweise x, y = 2, und R = ($C_1$-$C_{18}$)-Alkyl, vorzugsweise ($C_8$-$C_{12}$)-Alkyl, insbesondere Oktyl, bedeuten, Di-($C_1$-$C_{18}$)alkylthiodipropionate, vorzugsweise Di-($C_8$-$C_{14}$)-alkylthiodipropionate, insbesondere Dilaurylthiodipropionat,

oder Costabilisatoren vorzugsweise des Typs

d) Phosphorhaltige Verbindungen aus der Gruppe der hydrolysebeständigen Phosphite, vorzugsweise Alkylarylphosphite, insbesondere Tris-(2,4-ditert.-butylphenyl)-phosphit,

oder Mischungen von Costabilisatoren aus Verbindungen der Typen a) bis d), und gegebenenfalls außerdem

e) Lichtstabilisatoren, vorzugsweise UV-Stabilisatoren, insbesondere Benzotriazolderivate,

sowie gegebenenfalls

f) Weichmacher, weitere übliche Stabilisatoren, übliche Antihaftmittel und übliche Zusatzstoffe

enthalten.

Eine besonders bevorzugte Verbindung der Formel I ist Bis-[3,3-bis-(4'-hydroxy-3'-tert.butylphenyl)-butansäure]-glykolester, wobei in Formel I $R^1$ = H, $R^2$ = tert. Butyl, $R^3$ = Methyl, m = 1, n = 2 und $R^4$ = $-CH_2-CH_2-$ bedeutet.

Ein charakteristisches Strukturmerkmal der erfindungsgemäßen, Estergruppen enthaltenden phenolischen Verbindungen der Formel I besteht u.a. darin, daß ihre phenolischen Ringe in para-Stellung zur phenolischen Hydroxylgruppe durch ein quartäres C-Atom substituiert sind. Diese strukturelle Charakteristik führt bei Verwendung dieser Verbindungen als Antioxidantien in plastifiziertem PVB bei der thermoplastischen Verarbeitung des letzteren durch Extrusion zu Folien zu einem überraschend stark verminderten Auftreten von unerwünschten Verfärbungen bzw. Vergilbungen der Folien, vergleichsweise zur Verwendung von bekannten nichterfindungsgemäßen phenolischen Antioxidantien, mit denen bekanntermaßen meist gelblich gefärbte Folien erhalten werden. Vergleichsweise zu den letzteren Folien besitzen die unter Verwendung erfindungsgemäßer Antioxidantien der Formel I hergestellten Folien außerdem eine deutlich verbesserte optische Qualität, d.h. sie sind deutlich weniger gefärbt, was für ihre Verwendung zur Herstellung von Glasverbunden besonders wichtig und vorteilhaft ist. Darüber hinaus treten bei der Herstellung von Glasverbunden mit plastifizierten PVB-Folien, die unter Verwendung erfindungsgemäßer Antioxidantien der Formel I hergestellt wurden, deutlich geringere Randverfärbungen an den Glasverbunden auf, als mit vergleichbaren plastifizierten PVB-Folien, die durch Extrusion unter Verwendung nichterfindungsgemäßer phenolischer Antioxidantien hergestellt wurden. Dabei erfolgt die Glasverbundherstellung in bekannter Weise nach der Autoklavenmethode, bei der Test-Glasverbunde von 30 x 30 cm in einem Autoklaven bei 140 °C, einem Druck von 12 bar und 2 Stunden Haltezeit hergestellt werden. Die Verfärbung bzw. Vergilbung der Folien kann in bekannter Weise mit Hilfe des Yellowness Index nach ASTM-D-1925 ermittelt werden.

Der Zusatz erfindungsgemäßer Stabilisatoren zum PVB kann sowohl bei der Herstellung des PVB vor oder während der Acetalisierung des Ausgangspolyvinylalkohols, als auch vor der Extrusion des PVB-s erfolgen, indem man im letzteren Fall die Stabilisatoren zunächst im Weichmacher löst und das PVB mit der Weichmacherlösung plastifiziert.

Bevorzugt erfolgt der Stabilisatorzusatz bei der Herstellung des PVB-s, indem man der zu acetalisierenden wäßrigen Polyvinylalkohollösung die Stabilisatoren vorzugsweise im Butyraldehyd gelöst oder gegebenenfalls in einem wasserverdünnbaren Lösungsmittel, wie z.B. Methanol oder Methanol/Aceton 1:1, gelöst zutropft, wobei sich die gesamte Stabilisatormenge in dem entstehenden PVB anreichert und sich gut darin verteilt.

Die Costabilisatoren der Formel II werden vorzugsweise dem PVB, vorzugsweise im Weichmacher gelöst, vor der Extrusion oder bei der Extrusion zugesetzt, wobei die Vermischung der

Stabilisator/Weichmacherlösung mit dem PVB vor dem Eintritt in den Extruder oder im Schneckengang des Extruders erfolgen kann. Auch die Carbonsäurehydrazide des Costabilisatortyps b) werden dem PVB vorzugsweise vor oder bei der Extrusion, vorzugsweise im Weichmacher gelöst, zugesetzt.

Die vorstehend als Costabilisatortypen a) bis d) genannten Verbindungen zeigen in Kombination mit den erfindungsgemäßen phenolischen Antioxidantien der Formel I überraschenderweise eine synergistische antioxidative und thermostabilisierende Wirksamkeit, indem sie eine weitere Verringerung der oxidativ und thermisch bedingten Folienverfärbungen bewirken können, während bei ihrer Einzelanwendung eine solche Wirksamkeit nicht beobachtet werden kann und die Costabilisatoren der Formel II zudem bisher lediglich als Lichtstabilisatoren in PVB bekannt geworden sind. Die lichtstabilisierende Wirkung der Costabilisatoren der Formel II bleibt bei ihrer synergistischen Kombination mit phenolischen Antioxidantien der Formel I in PVB-Folien offensichtlich erhalten und kann zusätzlich zur Lichtstabilisierung der PVB-Folien beitragen. Besonders gute synergistische Wirksamkeiten können vorzugsweise durch die Kombination mehrerer verschiedener, vorzugsweise bis zu 4, Costabilisatoren der Typen a) bis d) mit phenolischen Antioxidantien der Formel I erzielt werden.

Die erfindungsgemäß durch Gehalte an Verbindungen der Formel I und gegebenenfalls zusätzlich durch Gehalte an synergistisch wirkenden Costabilisatoren der Typen a) bis d) stabilisierten PVB-e können außerdem noch weitere übliche Lichtstabilisatoren in üblichen Mengen, vorzugsweise UV-Stabilisatoren, insbesondere Benzotriazolderivate, sowie übliche Weichmacher, weitere übliche Stabilisatoren, übliche Antihaftmittel und übliche Zusatzstoffe enthalten, die dem PVB in üblicher Weise beigemischt werden.

Die Einsatzmenge erfindungsgemäßer phenolischer Antioxidantien der Formel I in weichmacherhaltigen Polyvinylbutyralen beträgt vorzugsweise 0,05 bis 0,8 Gew.-%, insbesondere 0,07 bis 0,5 Gew.-%, besonders bevorzugt 0,1 bis 0,3 Gew.-%, bezogen auf das PVB/Weichmacher-Gemisch.

In diesen Aufwandmengen sind die erfindungsgemäßen phenolischen Antioxidantien der Formel I vergleichbaren nichterfindungsgemäßen phenolischen Antioxidantien des Standes der Technik deutlich überlegen und führen insbesondere zu weichmacherhaltigen PVB-Flachfolien mit vergleichweise stark verminderten Verfärbungen bzw. Vergilbungen und deutlich verbesserter optischer Qualität.

Als nichterfindungsgemäße phenolische Antioxidantien, wie sie zur Herstellung von plastifizierten PVB-Flachfolien mit verminderten Gelbwerten gemäß dem nächstliegenden Stand der Technik verwendet werden, können vergleichsweise z.B. das einkernige und häufig verwendete Isobornylxylenol sowie die mehrkernigen Phenole Triethylenglykol-bis-3(3'-tert.butyl-4'-hydroxy-5'-methylphenyl)-propionat, 1,6-Hexandiol-bis-(3', 5'-ditert.butyl-4'-hydroxyphenyl)-propionat und Pentaerythrityl-tetrakis[3-(3', 5'-ditert.butyl-4'-hydroxyphenyl)-propionat] herangezogen und mit den erfindungsgemäßen phenolischen Antioxidantien der Formel I verglichen werden.

Unter den stickstoffhaltigen Costabilisatoren des Typs a) der vorstehend spezifizierten Formel II, welche strukturgemäß Piperidinderivate darstellen, werden vorzugsweise die bekannten Lichtstabilisatoren vom "HALS"-Typ (= hindered amine light stabilization) verwendet. Es wurde hierbei überraschenderweise gefunden, daß deren synergistische costabilisierende und vergilbungshemmende Wirksamkeit mit steigendem Molekulargewicht der HALS-Komponente zunimmt, wodurch plastifizierte PVB-Flachfolien mit noch stärker abnehmender Vergilbungsneigung erhalten werden können, so daß die höhermolekularen HALS-Verbindungen des Typs a) besonders bevorzugte Costabilisatoren sind. Besonders bevorzugt sind ferner polymere und copolymere Formen von Verbindungen der Formel II, da diese u.a. ebenfalls nicht aus dem PVB migrieren können. Besonders bevorzugt sind die aus epoxidgruppenhaltigen Verbindungen der Formel II hergestellten polymeren und copolymeren Formen. Als Costabilisatoren der Formel II werden folgende Verbindungen bevorzugt verwendet:

Bis-(2,2,6,6-tetramethylpiperidyl)-sebacat, -glutarat und -succinat,
Bis-(1,2,2,6,6-pentamethylpiperidyl)-sebacat, -glutarat und -succinat,
4-Stearyloxy- und 4-Stearoyloxy-2,2,6,6-tetramethyl-piperidin,
4-Stearyloxy- und 4-Stearoyloxy-1,2,2,6,6-pentamethyl-piperidin,
2,2,6,6-Tetramethylpiperidylbehenat,
1,2,2,6,6-Pentamethylpiperidylbehenat,
2,2,4,4-Tetramethyl-7-oxa-3,20-diaza-dispiro-[5.1.11.2]-heneicosan-21-on,
2,2,3,4,4-Penta-methyl-7-oxa-3,20-diaza-dispiro-[5.1.11.2]-heneicosan-21-on,
2,2,4,4-Tetramethyl-3-acetyl-7-oxa-3,20-diaza-dispiro-[5.1.11.2]-heneicosan-21-on,
2,2,4,4-Tetramethyl-7-oxa-3,20-diaza-20-($\beta$-lauryloxycarbonylethyl)-21-oxo-dispiro-[5.1.11.2]-heneicosan,
2,2,3,4,4-Pentamethyl-7-oxa-3,20-diaza-20-($\beta$-lauryloxycarbonylethyl)-21-oxo-dispiro-[5.1.11.2]-heneicosan,
2,2,4,4-Tetramethyl-3-acetyl-7-oxa-3,20-diaza-20-(ß-lauryloxycarbonylethyl)-21-oxo-dispiro-[5.1.11.2]-heneicosan,
1,1',3,3',5,5'-Hexahydro-2,2',4,4',6,6',-hexaaza-2,2',6,6',-bismethano-7,8-dioxo-4,4'-bis-(1,2,2,6,6-pentamethyl-4-piperidyl)-biphenyl,
N,N',N'',N'''-Tetrakis-{2,4-bis-[N-(2,2,6,6-tetramethyl-4-piperidyl)-butylamino]-1,3,5-triazin-6yl}-4,7-diazadecan-1,10-diamin,
N,N',N'',N'''-Tetrakis-{2,4-bis-[N-(1,2,2,6,6-pentamethyl-4-piperidyl)-butylamino]-1,3,5-triazin-6-yl}-4,7-diazadecan-1,10-diamin,
N,N',N'',N'''-Tetrakis-{2,4-bis-[N-(2,2,6,6-tetramethyl-4-piperidyl)-methoxypropylamino]-1,3,5-triazin-6-yl}-4,7-diazadecan-1,10-diamin,
N,N',N'',N'''-Tetrakis-{2,4-bis-[N-(1,2,2,6,6-pentamethyl-4-piperidyl)-methoxypropylamino]-1,3-5-triazin-6-yl}-4,7-diazadecan-1,10-diamin,
Bis-(1,2,2,6,6-pentamethyl-piperidyl)-n-butyl-3,5-di-tert.-butyl-4-hydroxybenzylmalonat,
Tris-(2,2,6,6-tetramethyl-4--piperidyl)-nitrilotriacetat,
Tetrakis-(2,2,6,6-tetramethyl-4-piperidyl)-1,2,3,4-butantetracarbonsäure,
1,1'-(1,2-Ethandiyl)-bis-(3,3,5,5-tetramethyl-piperazinon).

Ferner Poly-N,N'-bis-(2,2,6,6-tetramethyl-4-piperidyl)-1,8-diazadecylen, Kondensationsprodukte aus 1-(2-Hydroxyethyl)-2,2,6,6-tetramethyl-4-hydroxypiperidin und Bernsteinsäure,
Kondensationsprodukte aus N,N'-Bis-(2,2,6,6-tetramethyl-4-piperidyl)-hexamethylendiamin und 4-tert.-Oktylamino-2,6-dichlor-1,3,5-s-triazin,
Kondensationsprodukte aus N,N'-Bis-(2,2,6,6-tetramethyl-4-piperidyl)-hexamethylendiamin und 4-Morpholino-2,6-dichlor-1,3,5-triazin, sowie polymerisiertes 2,2,4,4-Tetramethyl-7-oxa-3,20-diaza-(2,3-epoxipropyl)-dispiro[5.1.11.2.]-heneicosan-21-on, erhalten aus der monomeren Verbindung der Formel

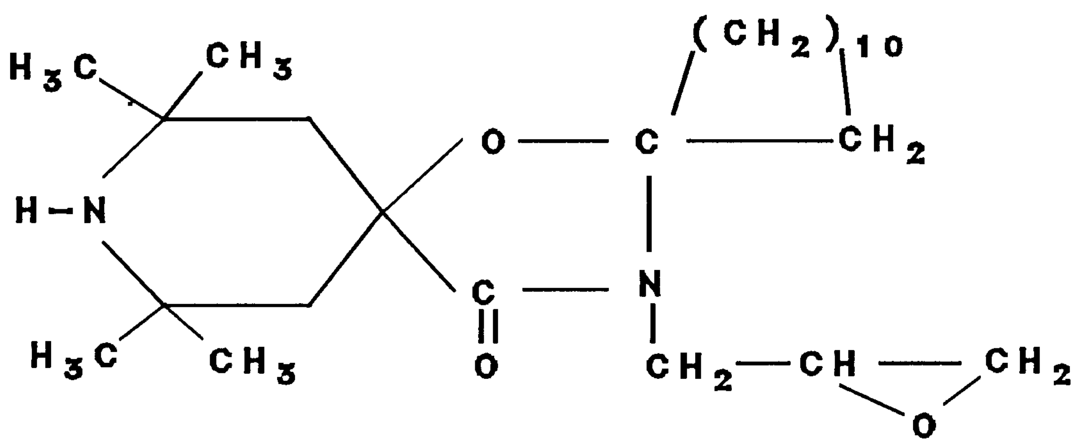

wobei die Polymerisation über die Epoxipropylgruppe erfolgte. Dieses polymere Produkt ist ein besonders bevorzugter Costabilisator auf der Basis einer Formel II-Verbindung des Typs a). Dabei ist das Molekulargewicht des Polymerisats nicht kritisch und kann in einem breiten Bereich variieren mit der Prämisse, daß das Produkt in dem plastifizierten PVB stets vollständig und klar löslich sein muß.

Bei Mitverwendung erfindungsgemäßer Costabilisatoren der Typen a) bis d) in Kombination mit phenolischen Stabilisatoren der Formel I in weichmacherhaltigen Polyvinylbutyralen beträgt die Einsatzmenge des phenolischen Formel I-Stabilisators vorzugsweise 0,05 bis 0,6 Gew.-%, insbesondere 0,07 bis 0,4 Gew.-%, besonders bevorzugt 0,1 bis 0,3 Gew.-%, und die Einsatzmenge des Costabilisators bzw. des Costabilisatorengemisches vorzugsweise 0,01 bis 0,5 Gew.-%, insbesondere 0,1 bis 0,4 Gew.-%, wobei die Gesamtmenge aus Formel I-Stabilisator und Costabilisatoren vorzugsweise ≦ 0,8 Gew.-%, insbesondere 0,2 bis 0,4 Gew.-%, beträgt, jeweils bezogen auf das PVB/Weichmacher-Gemisch. Das Gewichtsverhältnis von phenolischem Stabilisator der Formel I zu dem Costabilisator bzw. Costabilisatorengemisch beträgt vorzugsweise 90:10 bis 20:80.

Grundsätzlich lassen sich mit den erfindungsgemäßen phenolischen Stabilisatoren der Formel I sowie mit erfindungsgemäßen Kombinationen aus phenolischen Formel I-Stabilisatoren und synergistisch wirkenden Costabilisatoren bzw. Costabilisatorengemischen der Typen a) bis d) alle Polyvinylbutyraltypen, die sich in plastifizierter Form durch thermoplastische Extrusion zu plastifizierten PVB-Flachfolien verarbeiten lassen, vorteilhaft für die thermoplastische Verarbeitung stabilisieren. Die hierfür vorzugsweise geeigneten Polyvinylbutyrale besitzen einen Gehalt an Vinylalkoholeinheiten von vorzugsweise 17 bis 29 Gew.-%, insbesondere 18,5 bis 24 Gew.-%, besonders bevorzugt 19 bis 22 Gew.-%, bezogen auf das PVB. Die Viskosität der 5 gew.-%igen ethanolischen Lösungen der PVB-e (gemessen nach DIN 53015) bei 23 °C

beträgt vorzugsweise 10 bis 200 mPa.s, insbesondere 50 bis 100 mPa.s.

Als Weichmacher können alle mit PVB verträglichen und für dessen Plastifizierung geeigneten bekannten Weichmacher oder Weichmachergemische verwendet werden. Eine Aufstellung von handelsüblichen Weichmachern, die Angaben über deren Verträglichkeit mit PVB enthält, kann z.B. der Druckschrift Modern Plastics Encyclopedia 1981/1982, Seiten 710 bis 719, entnommen werden. Bevorzugte Weichmacher sind z. B. Diester von aliphatischen Diolen, insbesondere von aliphatischen Polyätherdiolen bzw. Polyätherpolyolen, mit aliphatischen Carbonsäuren, vorzugsweise Diester von Polyalkylenoxiden, insbesondere Diester des Di-, Tri- und Tetraethylenglykols mit aliphatischen ($C_6$-$C_{10}$)-Carbonsäuren, vorzugsweise 2-Ethylbuttersäure und n-Heptansäure, ferner Diester von aliphatischen oder aromatischen ($C_2$-$C_{18}$)-Dicarbonsäuren, vorzugsweise Adipin-, Sebazin- und Phthalsäure, mit aliphatischen ($C_4$-$C_{12}$)-Alkoholen, vorzugsweise Dihexyladipat.

Die Weichmacher werden zur Plastifizierung von PVB in üblichen Mengen eingesetzt, die vorzugsweise im Bereich von 20 bis 50 Gew.-%, insbesondere 23 bis 30 Gew.-%, bezogen auf das PVB/Weichmacher-Gemisch, liegen können.

Erfindungsgemäß stabiliserte Polyvinylbutyrale mit wirksamen Gehalten an phenolischen Antioxidantien der Formel I und gegebenenfalls Gehalten an synergistisch wirkenden Costabilisatoren der vorstehend beschriebenen Typen a) bis d) sowie gegebenenfalls Gehalten an weiteren Stabilisatoren, vorzugsweise Lichtstabilisatoren, werden vorzugsweise in plastifizierter Form und gegebenenfalls mit Gehalten an weiteren Zusatzstoffen zur Herstellung von Folien durch thermoplastische Extrusion verwendet und die resultierenden Folien vorzugsweise als Zwischenlagen bei der Herstellung von Verbundgläsern aus anorganischen Glasscheiben eingesetzt, wobei Verbundgläser von hoher Qualität mit deutlich verminderter Gelbfärbung und überraschend vorteilhaften Gebrauchseigenschaften erhalten werden können.

Anstelle der durch Beimischung von niedermolekularen äußeren Weichmachern plastifizierten Polyvinylbutyrale können auch innerlich weichgemachte Polyvinylbutyrale, deren Schmelztemperatur unterhalb ihrer Zersetzungstemperatur liegt, gegebenenfalls ohne die Mitverwendung niedermolekularer äußerer Weichmacher erfindungsgemäß stabilisiert und thermoplastisch verarbeitet werden.

Die erfindungsgemäß stabilisierten und plastifizierten Polyvinylbutyrale werden vorzugsweise mittels thermoplastischer Extrusion durch Breitschlitzdüsen zu vorzugsweise 0,2 bis 2 mm dicken Flachfolien extrudiert. Die Extrusionstemperatur der Extrusionsformmassen liegt im üblichen Bereich, vorzugsweise zwischen 140 und 250 °C, wobei kurzzeitig auch höhere Temperaturen erreicht werden können. Die Herstellung von Flachfolien kann auch durch thermoplastische Verformung der erfindungsgemäß stabilisierten und plastifizierten PVB-Formmassen auf einem beheizbaren Dreiwalzenstuhl bzw. einem Kalander erfolgen.

Die Extrusionsformmassen können außer den vorstehend bereits genannten Stabilisatoren und Weichmachern noch weitere übliche Zusätze enthalten, wie z.B. geringe Mengen an Alkali, vorzugsweise z.B. 0,001 bis 0,1 Gew.-%, bezogen auf PVB, Alkalihydroxid oder alkalisch reagierendes Alkalisalz zur Stabilisierung des PVB-s gegen saure Hydrolyse. Dieser Alkaligehalt wird üblicherweise auch als Alkalititer des PVB-s bezeichnet. Die plastifizierten PVB-Extrusionsformmassen können ferner bekannte Antihaftmittel in üblichen Mengen enthalten, wie z.B. Alkalisalze oder Erdalkalisalze von Carbonsäuren, vorzugsweise Kalium- oder Magnesiumsalze der Ameisensäure oder der Essigsäure oder Kombinationen dieser Salze mit Kalium- oder Magnesiumsalzen von Hydroxycarbonsäuren, ferner Alkali- oder Erdalkalisalze von Dicarbonsäuren oder Magnesiumacetylacetonat sowie verschiedene Silane oder Siloxane, wie z.B. 3-(Methyltriethylenglykoxy)-propylsilan-tris-methyltriethylenglykolester. Die Einsatzmenge an diesen Antihaftmitteln liegt z.B. vorzugsweise im Bereich von 0,001 bis 0,2 Gew.-%, bezogen auf das PVB/Weichmacher-Gemisch.

Bei der Mitverwendung von zusätzlichen Lichtstabilisatoren, vorzugsweise UV-Stabilisatoren, wie z.B. den bekannten Benzotriazolderivaten, hat sich überraschenderweise gezeigt, daß die Einsatzmengen dieser UV-Stabilisatoren erheblich reduziert werden können, wenn man sie in Kombination mit erfindungsgemäßen Stabilisatoren der Formel I und Costabilisatoren der Formel II einsetzt. Dies ist einerseits ökonomisch vorteilhaft und führt außerdem überraschenderweise zu Folien mit verbesserten Farbwerten, d.h. geringerer Eigenfarbe der Folien, was für deren Verwendung zur Herstellung von Glasverbunden besonders wichtig ist.

Darüber hinaus ist es bei der Folienextrusion von plastifizierten Polyvinylbutyralen besonders wichtig, bei möglichst hohen Massetemperaturen extrudieren zu können, um dadurch die Schmelzviskosität der plastifizierten Extrusionsmasse möglichst stark absenken bzw. möglichst niedrig halten und möglichst hohe Extruderdurchsätze pro Zeiteinheit erzielen zu können, ohne die Extrusionsmasse oxidativ und/oder thermisch zu schädigen und Vergilbungen zu riskieren. Durch die Verwendung von erfindungsgemäß stabilisierten PVB-en können diese Forderungen weitgehend erfüllt werden.

Die Erfindung wird durch die nachstehenden Beispiele näher erläutert.

**Beispiel 1**

**Thermische und antioxidative Stabilisierung von plastifiziertem Polyvinylbutyral (PVB) mit dem erfindungsgemäßen phenolischen Formel I-Stabilisator Bis-[3,3-bis-(4'-hydroxy-3'-tert.butylphenyl)-butansäure]-glykolester.**

Es wurde ein PVB mit einem Vinylalkoholeinheitengehalt von 20,1 Gew.-%, bezogen auf das PVB, einem Alkalititer von 15 ml n/100 HCl pro 100 g PVB und einer Viskosität der 5 gew.-%igen ethanolischen PVB-Lösung bei 23 °C von 62 mPa.s (gemessen nach DIN 53015) in üblicher Weise durch Acetalisierung von Polyvinylalkohol in wäßriger Lösung mit Butyraldehyd unter Zusatz eines Säurekatalysators hergestellt und das ausgefallene PVB abgetrennt, in üblicher Weise neutral gewaschen, anschließend in einem alkalisch eingestellten wäßrigen Medium suspendiert und unter intensivem Rühren nachbehandelt, danach erneut neutral gewaschen und getrocknet. In dem zur Acetalisierung verwendeten Butyraldehyd wurden zuvor 0,3 Gew.-%, bezogen auf das resultierende PVB, des oben genannten phenolischen Antioxidans der Formel I gelöst, die sich dann bei der Acetalisierungsreaktion im entstandenen PVB verteilten und vollständig darin aufgenommen wurden. Anschließend wurde das erhaltene und durch den Gehalt an der Verbindung der Formel I stabilisierte PVB mit 26 Gew.-%, bezogen auf das PVB/Weichmacher-Gemisch, des Weichmachers Triethylenglykol-di-n-heptanoatplastifiziert, dabei zusätzlich mit 0,08 Gew.-%, bezogen auf das PVB/Weichmacher-Gemisch, des Antihaftmittels Kaliumacetat vermischt und in einem Zweischnekkenextruder (Hersteller: Fa. Haake) bei einer Massetemperatur von 200 °C zu einer 0,8 mm dicken Flachfolie extrudiert. Die Bestimmung der Gelbfärbung der Folie erfolgte im wesentlichen nach der Methode ASTM-D-1925 an Verbundgläsern, welche die Folie als Zwischenschicht enthielten, unter Eliminierung des folienfreien Glasscheibenfarbwertes. Die resultierende Meßgröße ist der "Yellowness Index" (YI), wobei in den vorliegenden Beispielen der Differenzwert ΔYI angegeben wird, wie er sich aus der Meßgröße für das Verbundglas abzüglich der Meßgröße für die folienfreien Glasplatten des Verbundglases ergab. Die Verbundglasherstellung erfolgte in den meisten Fällen der vorliegenden Beispiele nicht nach der Autoklavenmethode, sondern nach einer Schnellpress-Labormethode, bei der die Glasplatten mit den Zwischenschichtverbundfolien ohne Autoklav bei 150 °C mit einer Haltezeit von 3 Minuten bei 12 bar verpreßt wurden und der ermittelte YI-Wert der verwendeten folienfreien Glasplatten vom ermittelten YI-Wert des mit Folien verpreßten Glasverbundes abgezogen und dabei der angegebene ΔYI-Wert erhalten wurde. Bei der erfindungsgemäß nach Beispiel 1 stabilisierten und plastifizierten PVB-Folie betrug der Wert für ΔYI = 1,9.

**Vergleichsbeispiele 1 bis 5**

Es wurde wie in Beispiel 1 beschrieben verfahren mit der Abänderung, daß anstelle des erfindungsgemäßen phenolischen Stabilisators der Formel I jeweils eine gleiche Menge eines bekannten nichterfindungsgemäßen phenolischen Stabilisators zugesetzt und der ΔYI-Wert der jeweils resultierenden plastifizierten PVB-Folie ermittelt wurden. Im einzelnen wurden dabei mit einkernigen und mehrkernigen Phenolen folgende Ergebnisse erhalten:

**Vergleichsbeispiel 1**

Es wurde als phenolischer Stabilisator das einkernige Isobornylxylenol zugesetzt. Die resultierende plastifizierte PVB-Folie zeigte einen ΔYI-Wert von 3,84.

**Vergleichsbeispiel 2**

Es wurde als phenolischer Stabilisator das mehrkernige N,N'-Bis-[3-(3',5'-di-tert.butyl-4'-hydroxyphenyl)-propionyl]-hydrazin zugesetzt.
Die resultierende plastifizierte PVB-Folie zeigte einen ΔYI-Wert von 2,71.

**Vergleichsbeispiel 3**

Es wurde als phenolischer Stabilisator das mehrkernige Pentaerythrityl-tetrakis-[3-(3,5-di-tert.butyl-4-hydroxyphenyl)-propionat] zugesetzt.
Die resultierende plastifizierte PVB-Folie zeigte einen ΔYI-Wert von 2,57.

**Vergleichsbeispiel 4**

Es wurde als phenolischer Stabilisator das mehrkernige 1,6-Hexandiolbis-3-(3,5-di-tert.butyl-4-hydroxyphenyl)-propionat zugesetzt.
Die resultierende plastifizierte PVB-Folie zeigte einen ΔYI-Wert von 2,14.

**Vergleichsbeispiel 5**

Es wurde als phenolischer Stabilisator das mehrkernige Triethylenglykol-bis-3-(3-tert.butyl-4-hydroxy-5-methylphenyl)-propionat zugesetzt.
Die resultierende plastifizierte PVB-Folie zeigte einen ΔYI-Wert von 2,85.

Wie die Ergebnisse der Vergleichsbeispiele 1 bis 5 zeigen, liegen die ΔYI-Werte mit den bekannten nichterfindungsgemäßen phenolischen Stabilisatoren im Bereich von 2,14 bis 3,84, also deutlich höher als der erfindungsgemäße Wert des Beispiels 1 von 1,9 , d.h., die nichterfindungsgemäß stabilisierten Folien erleiden bei der thermoplastischen Extrusionsverarbeitung vergleichsweise eine deutlich stärkere Vergilbung bzw. Verfärbung als die erfindungsgemäß stabilisierte Folie des Beispiels 1. Da die ΔYI-Werte mit abnehmender Vergilbung der Folien kleiner werden, stellt der erfindungsgemäße Wert des Beispiels 1 mit 1,9 ein unerwartet gutes und bisher mit keinem der bekannten phenolischen Stabilisatoren zu erreichendes Stabilisierungsergebnis dar. Besonders bevorzugt sind daher Stabilisatoren, mit denen ΔYI-Werte von $\leqq$ 2,1, insbesondere $\leqq$ 2, erreicht werden können, ermittelt an Verbundgläsern, die nicht nach der Autoklavenmethode, sondern nach der in Beispiel 1 beschriebenen Schnellpress-Labormethode ohne Autoklav (3 Minuten Haltezeit bei 12 bar Pressdruck und 150 °C) aus 2 Glasscheiben von 30 x 30 x 0,5 cm und einer dazwischenliegenden plastifizierten PVB-Folie durch Verpressen hergestellt wurden, was sich mit den erfindungsgemäßen Stabilisatoren der Formel I, insbesondere in Kombination mit erfindungsgemäßen Costabilisatoren, unschwer ermöglichen läßt. Verbundglasfolien mit sehr niedrigen ΔYI-Werten sind insbesondere für die Herstellung von Mehrfachschichtgläsern, wie z.B. Panzergläsern, wichtig, da der Vergilbungswert bzw. Gelbwert der Folie dort mehrfach zur Gesamtvergilbung des fertigen Glasverbundes beiträgt.

**Beispiele 2 bis 12**

**Thermische und antioxidative Stabilisierung von plastifiziertem PVB mit Kombinationen aus einem erfindungsgemäßen phenolischen Stabilisator der Formel I und verschiedenen synergistisch wirkenden erfindungsgemäßen Costabilisatoren.**

Es wurde als Ausgangs-PVB für die Beispiele 2 bis 12 ein PVB mit einem Vinylalkoholeinheitengehalt von 20,6 Gew.-%, einem Alkalititer von 14 ml n/100 HCl pro 100 g PVB und einer Viskosität der 5 gew.-%igen ethanolischen PVB-Lösung bei 23 °C von 58 mPa.s (gemessen nach DIN 53015) in üblicher Weise durch Acetalisierung von Polyvinylalkohol in wäßriger Lösung mit Butyraldehyd, in dem 0,3 Gew.-%, bezogen auf das resultierende PVB, des erfindungsgemäßen phenolischen Stabilisators Bis-[3,3-bis-(4'-hydroxy-3'-tert.butylphenyl)butansäure]-glykolester der Formel I gelöst waren, unter Zusatz eines Säurekatalysators hergestellt und das ausgefallene PVB, das die gesamte Stabilisatormenge enthielt, abgetrennt, in üblicher Weise wie in Beispiel 1 beschrieben neutral gewaschen und getrocknet.

Das so erhaltene stabilisatorhaltige PVB wurde in 11 gleiche Teile aufgeteilt und in 11 parallelen Mischvorgängen mit jeweils 26 Gew.-%, bezogen auf das PVB/Weichmacher-Gemisch, des Weichmachers Triethylenglykol-di-n-heptanoat, in dem jeweils ein synergistisch wirkender erfindungsgemäßer Costabilisator, wie in den Beispielen 3 bis 12 angegeben, gelöst war, plastifiziert. Diejenigen Costabilisatoren, die im Weichmacher unlöslich waren, wurden in geringen Mengen eines organischen Lösungsmittels oder in Wasser (z.B. die Säurehydrazide) gelöst und diese Lösung der PVB/Weichmacher-Mischung bei der Plastifizierung direkt zugesetzt und allen Mischungen außerdem noch 0,08 Gew.-%, bezogen auf das PVB/Weichmacher-Gemisch, Kaliumacetat als Antihaftmittel beigemischt.

Die erhaltenen Formmassen wurden dann in einem Brabender Einschneckenextruder bei einer Massetemperatur von 150 °C jeweils zu 0,8 mm dicken Flachfolien extrudiert. Zur Beurteilung der Vergilbung bzw. der Gelbfärbung der Folien wurde der Yellowness-Index (ΔYI) wie in Beispiel 1 beschrieben nach ASTM-D-1925 ermittelt, unterjeweiliger Herstellung der Verbundglasproben ohne Autoklav nach der Schnellpress-Labormethode.

Im einzelnen wurden in den Beispielen 2 bis 12 mit den verschiedenen Costabilisatoren folgende Ergebnisse erhalten:

**Beispiel 2**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet mit der Abänderung, daß ihr bei der Plastifizierung kein Costabilisator zugesetzt wurde. Die resultierende costabilisatorfreie plastifizierte PVB-Folie zeigte einen ΔYI-Wert von 1,73.

**Beispiel 3**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als schwefelhaltiger Costabilisator des Typs c) 0,5 Gew.-%, bezogen auf die PVB/Weichmacher-Formmasse, Dilaurylthiodipropionat zugesetzt. Die resultierende plastifizierte PVB-Folie zeigte einen ΔYI-Wert von 1,28.

**Beispiel 4**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als schwefelhaltiger Costabilisator des Typs c) 0,5 Gew.-%, bezogen auf die PVB/Weichmacher-Formmasse, Distearylthiodipropionat zugesetzt. Die resultierende plastifizierte PVB-Folie zeigte einen ΔYI-Wert von 1,44.

**Beispiel 5**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als schwefelhaltiger Costabilisator des Typs c) 0,5 Gew.-%, bezogen auf die PVB/Weichmacher-Formmasse, Dioktylzinn-di-thioglykolsäureoktylester zugesetzt. Die resultierende plastifizierte PVB-Folie zeigte einen ΔYI-Wert von 0,83.

**Beispiel 6**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als stickstoffhaltiger Costabilisator des Typs b) 0,2 Gew.-%, bezogen auf die PVB/Weichmacher-Formmasse, Adipinsäuredihydrazid zugesetzt. Die resultierende plastifizierte PVB-Folie zeigte einen ΔYI-Wert von 1,27.

**Beispiel 7**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als stickstoffhaltiger Costabilisator des Typs b) 0,2 Gew.-%, bezogen auf die PVB/Weichmacher-Formmasse, Essigsäurehydrazid zugesetzt. Die resultierende plastifizierte PVB-Folie zeigte einen ΔYI-Wert von 1,18.

**Beispiel 8**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als stickstoffhaltiger Costabilisator des Typs a) (HALS) 0,2 Gew.-%, bezogen auf die PVB/Weichmacher-Formmasse, Bis(2,2,6,6-tetramethyl-4-piperidyl)-sebazat zugesetzt. Die resultierende plastifizierte PVB-Folie zeigte einen ΔYI-Wert von 1,56.

**Beispiel 9**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als stickstoffhaltiger Costabilisator des Typs a) (HALS) 0,2 Gew.-%, bezogen auf die PVB/Weichmacher-Formmasse, 2,2,4,4-Tetramethyl-7-oxa-3,20-diazadispiro[5.1.11.2]-heneicosan-21-on zugesetzt. Die resultierende plastifizierte PVB-Folie zeigte einen ΔYI-Wert von 1,53.

**Beispiel 10**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als stickstoffhaltiger Costabilisator des Typs a) (HALS) 0,2 Gew.-%, bezogen auf die PVB/Weichmacher-Formmasse, 2,2,4,4-Tetramethyl-7-oxa-3,20-diaza-20-($\beta$-lauryloxycarbonylethyl)-21-oxo-dispiro[5.1.11.2]-heneicosan-21-on zugesetzt. Die resultierende plastifizierte PVB-Folie zeigte einen ΔYI-Wert von 1,4.

**Beispiel 11**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als stickstoffhaltiger Costabilisator des Typs a) (HALS) 0,2 Gew.-%, bezogen auf die PVB/Weichmacher-Formmasse, polymerisiertes 2,2,4,4-Tetramethyl-7-oxa-3,20-diaza-20-(2,3-epoxipropyl)-dispiro[5.1.11.2]-heneicosan-21-on zugesetzt. Die resultierende plastifizierte PVB-Folie zeigte einen ΔYI-Wert von 1,29.

**Beispiel 12**

Es wurde die nach der vorstehend unter Beispiel 2 bis 12 angegebenen allgemeinen Herstellungsvorschrift erhaltene und den phenolischen Stabilisator enthaltende PVB/Weichmacher-Formmasse verwendet und dieser bei der Plastifizierung als phosphorhaltiger Costabilisator des Typs d) 0,2 Gew.-%, bezogen auf die PVB/Weichmacher-Formmasse, Tris-(2,4-ditert.butylphenyl)-phosphit zugesetzt. Die resultierende plastifizierte PVB-Folie zeigte einen ΔYI-Wert von 1,38.

**Beispiel 13**

Es wurde nach der in Beispiel 1 beschriebenen Methode ein PVB hergestellt, das 20,5 Gew.-% Vinylalkoholeinheiten, bezogen auf das PVB, einen Alkalititer von 19 ml n/100 HCl pro 100 g PVB, eine Viskosität der 5 gew.-%igen ethanolischen PVB-Lösung bei 23 °C von 60 mPa.s (gemessen nach DIN 53015) und einen Gehalt von 0,3 Gew.-%, bezogen auf das PVB, des erfindungsgemäßen phenolischen Formel I-Stabilisators Bis[3,3-bis-(4'-hydroxy-3'-tert.butylphenyl)butansäure]-glykolester aufwies, wobei der Stabilisator, gelöst in Butyraldehyd, dem PVB bei der Acetalisierungsreaktion zugemischt wurde.

**Beispiel 14**

Es wurde nach der in Beispiel 1 beschriebenen Methode ein PVB hergestellt, das 20,5 Gew.-% Vinylalkoholeinheiten, bezogen auf das PVB, einen Alkalititer von 19 ml n/100 HCl pro 100 g PVB, eine Viskosität der 5 gew.-%igen ethanolischen PVB-Lösung bei 23 °C von 60 mPa.s (gemessen nach DIN 53015) und einen Gehalt von 0,15 Gew.-%, bezogen auf das PVB, des erfindungsgemäßen phenolischen Formel I-Stabilisators Bis-[3,3-bis-(4'-hydroxy-3'-tert.butylphenyl)butansäure]-glykolester und 0,15 Gew.-%, bezogen auf das PVB, des schwefelhaltigen Costabilisators des Typs c) Dilaurylthiodipropionat aufwies, wobei sowohl der phenolische Stabilisator als auch der Costabilisator, jeweils gelöst in Butyraldehyd, dem PVB bei der Acetalisierungsreaktion zugemischt wurden.

**Beispiel 15**

Es wurde nach der in Beispiel 1 beschriebenen Methode ein PVB hergestellt, das 20,3 Gew.-% Vinylalkoholeinheiten, bezogen auf das PVB, einen Alkalititer von 19 ml n/100 HCl pro 100 g PVB, eine

Viskosität der 5 gew.-%igen ethanolischen PVB-Lösung bei 23 °C von 60 mPa.s (gemessen nach DIN 53015) und einen Gehalt von 0,15 Gew.-%, bezogen auf das PVB, des erfindungsgemäßen phenolischen Formel I-Stabilisators Bis-[3,3-bis-(4'-hydroxy-3'-tert.butylphenyl)butansäure]-glykolester und 0,15 Gew.-%, bezogen auf das PVB, des stickstoffhaltigen Costabilisators des Typs a) (HALS) polymerisiertes 2,2,4,4-Tetramethyl-7-oxa-3,20-diaza-20-(2,3-epoxipropyl)-dispiro[5.1.11.2]-heneicosan-21-on aufwies, wobei sowohl der phenolische Stabilisator als auch der Costabilisator, jeweils gelöst in Butyraldehyd, dem PVB bei der Acetalisierungsreaktion zugemischt wurden.

**Vergleichsbeispiel 6**

Es wurde nach der in Beispiel 1 beschriebenen Methode ein PVB hergestellt, das 21,3 Gew.-% Vinylalkoholeinheiten, bezogen auf das PVB, einen Alkalititer von 21 ml n/100 HCl pro 100 g PVB, eine Viskosität der 5 gew.-%igen ethanolischen PVB-Lösung bei 23 °C von 60 mPa.s (gemessen nach DIN 53015) und, in Abänderung zu Beispiel 1, anstelle des erfindungsgemäßen phenolischen Formel I-Stabilisators einen Gehalt von 0,3 Gew.-%, bezogen auf das PVB, des nichterfindungsgemäßen phenolischen Stabilisators Isobornylxylenol aufwies, wobei der Stabilisator, gelöst in Butyraldehyd, dem PVB bei der Acetalisierungsreaktion zugemischt wurde.

**Beispiel 16**

Die nach den Beispielen 13, 14 und 15 sowie dem Vergleichsbeispiel 6 hergestellten stabilisierten PVB-e wurden nach ihrer Plastifizierung mit dem Weichmacher Triethylenglykol-di-n-heptanoat jeweils in mehrere Probenmengen aufgeteilt, die einzelnen Proben jeweils den nachstehend unter A bis D angegebenen verschiedenen Verarbeitungsbedingungen unterworfen und die Verfärbungen bzw. Gelbwerte (ΔYI) der jeweils resultierenden Flachfolien bzw. Glasverbunde ermittelt. Im einzelnen wurde wie folgt verfahren:

**A: Kneterversuche**
Die jeweils 27 Gew.-% Weichmacher enthaltenden PVB/Weichmacher-Formmassen wurden in einem Kneter mit 50 Upm bei 150 °C jeweils 10 Minuten lang behandelt, die Massen anschließend in einer Plattenpresse bei 150 °C Massetemperatur jeweils zu einer 0,8 mm dicken Flachfolie gepresst und der Gelbwert (ΔYI) der Folie im Glasverbund ermittelt. Das Ergebnis ist in der Tabelle 1 zusammengefaßt wiedergegeben.

**B: Extrusion in einem Haake-Zweischneckenextruder**
Die jeweils 26 Gew.-% Weichmacher enthaltenden PVB/Weichmacher-Formmassen, denen bei der Plastifizierung zusätzlich jeweils 0,08 Gew.-%, bezogen auf die PVB/Weichmacher-Formmasse, Kaliumacetat als Antihaftmittel zugemischt wurden, wurden bei einer Massetemperatur von 215 °C in einem Zweischneckenextruder jeweils zu einer 0,8 mm dicken Flachfolie extrudiert und der Gelbwert (ΔYI) der Folie im Glasverbund ermittelt. Das Ergebnis ist in der Tabelle 1 zusammengefaßt wiedergegeben.

**C: Extrusion in einem Leistritz-Zweischneckenextruder**
Die jeweils 26 Gew.-% Weichmacher enthaltenden PVB/Weichmacher-Formmassen, denen bei der Plastifizierung zusätzlich jeweils 0,08 Gew.-%, bezogen auf die PVB/Weichmacher-Formmasse, Kaliumacetat als Antihaftmittel zugemischt wurden, wurden bei einer Massetemperatur von 155 °C in einem Zweischneckenextruder jeweils zu einer 0,8 mm dicken Flachfolie extrudiert und der Gelbwert (ΔYI) der Folie im Glasverbund ermittelt. Das Ergebnis ist in der Tabelle 1 zusammengefaßt wiedergegeben.

**D:** Aus den nach der Verarbeitungsvariante C erhaltenen plastifizierten PVB-Folien wurden aus zwei Glasplatten von jeweils 30 x 30 x 0,5 cm und einer dazwischen liegenden plastifizierten PVB-Folie jeweils Glasverbunde im Autoklaven bei 140 °C, einem Druck von 12 bar und einer Haltezeit von 2 Stunden hergestellt, analog der üblichen großtechnischen Herstellungsmethode für Mehrschichtpanzergläser und Sicherheitsglasscheiben für Automobile. Die Bestimmung des Yellowness Index (ΔYI) der Glasverbundfolien erfolgte an den fertigen Glasverbunden gemäß ASTM-D-1925 nach vorausgegangener Ermittlung der Leerglaskorrektur. Die Bestimmung der Randverfärbung bei den nach der Autoklavenmethode hergestellten Glasverbunden erfolgte visuell. Das Ergebnis der Gelbwerte (ΔYI) der Folien und das Ausmaß der Glasverbund-Randverfärbungen sind in der Tabelle 1 zusammengefaßt wiedergegeben.

Die in der Tabelle I angegebenen Gelbwerte (ΔYI) für die nach den Verarbeitungsarten A, B und C erhaltenen plastifizierten PVB-Folien wurden an Verbundgläsern ermittelt, die nicht nach der Autoklavenmethode, sondern nach der in Beispiel 1 beschriebenen Schnellpress-Labormethode ohne Autoklav (3 Minuten Haltezeit bei 150 °C und 12 bar Pressdruck) hergestellt wurden. Die Gelbwerte (ΔYI) für die bei der Verarbeitungsart D resultierenden plastifizierten PVB-Folien wurden an Verbundgläsern ermittelt, die nach der Autoklavenmethode (2 Stunden Haltezeit bei 12 bar und 140 °C im Autoklav) hergestellt worden sind,

wobei insbesondere auch das Problem der Randverfärbungen von besonderer Relevanz sein kann.

Tabelle 1

| Stabilisierte PVB/Weichmacher-Formmasse aus | Gelbwerte (ΔYI) der nach den Verarbeitungsarten A, B, C und D resultierenden plastifizierten PVB-Folien und deren Randverfärbungen bei D | | | |
|---|---|---|---|---|
| | A (ΔYI) | B (ΔYI) | C (ΔYI) | D (ΔYI) |
| Vergleichsbeispiel 6 | 13,92 | 2,78 | 2,13 | 3,48 5 mm brauner Rand |
| Beispiel 13 | 11,59 | 2,10 | 1,78 | 3,12 0,5 mm brauner Rand |
| Beispiel 14 | 9,58 | 1,83 | 1,49 | 2,71 0,5 mm brauner Rand |
| Beispiel 15 | 10,41 | 1,96 | 1,59 | 2,82 0,5 mm brauner Rand |

Wie den Ergebnissen in der Tabelle 1 entnommen werden kann, werden die besten Stabilisierungswirkungen bei den Formmassen aus den Beispielen 14 und 15 erhalten, aus denen sehr deutlich die synergistische Wirksamkeit der erfindungsgemäßen Costabilisatoren, vergleichsweise zu Beispiel 13 ohne Costabilisator, ersichtlich ist. Das Ergebnis mit der nichterfindungsgemäßen Formmasse des Vergleichsbeispiels 6 ist gegenüber den erfindungsgemäßen Ergebnissen deutlich schlechter sowohl bei den ΔYI-Werten als auch insbesondere bei dem 10-fach breiteren braunen Rand an dem nach dem Autoklavenverfahren hergestellten Glasverbund.

## Patentansprüche

1. Polyvinylbutyrale (PVB-e), die verbesserte Thermostabilität und gegebenenfalls verbesserte Lichtbeständigkeit besitzen, mit Gehalten an phenolischen Oxidationsstabilisatoren und gegebenenfalls Lichtstabilisatoren und gegebenenfalls Weichmachern, dadurch gekennzeichnet, daß sie als phenolische Stabilisatoren mehrkernige Phenole der Formel I,

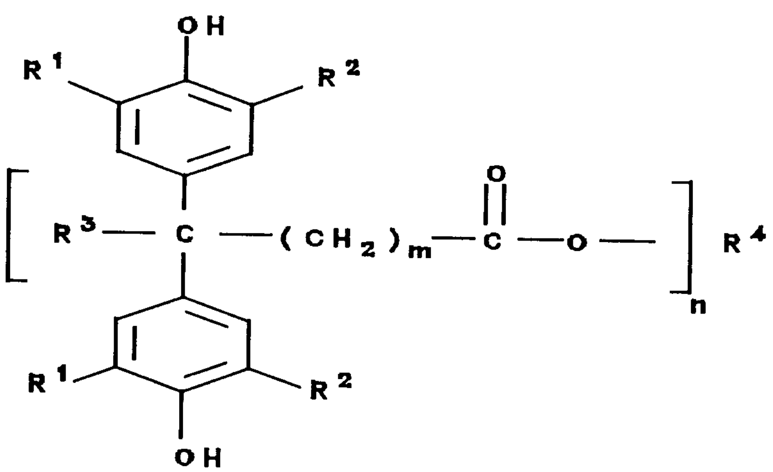

( I )

worin

$R^1$ und $R^2$, die gleich oder verschieden sein können,
= H, lineares oder verzweigtes ($C_1$-$C_8$)-Alkyl oder ($C_4$-$C_8$)-Cycloalkyl, vorzugsweise Cyclohexyl und vorzugsweise tert.-Butyl,
$R^3$ = H oder $-CH_3$,
$R^4$, das einbindig oder zweibindig, vorzugsweise linear und α, ω-zweibindig, sein kann,
= ($C_1$-$C_{10}$)Alkyl wenn n = 1, oder $-C_pH_{2p}-$ mit p = 1 bis 8, vorzugsweise p = 2, wenn

n = 2,
n = 1 oder 2, vorzugsweise 2, und
m = 1 bis 4

bedeutet, gegebenenfalls in Kombination mit synergistisch wirkenden stickstoffhaltigen, schwefelhaltigen oder phosphorhaltigen Costabilisatoren, vorzugsweise des Typs

a) Stickstoffhaltige Verbindungen der Formel II,

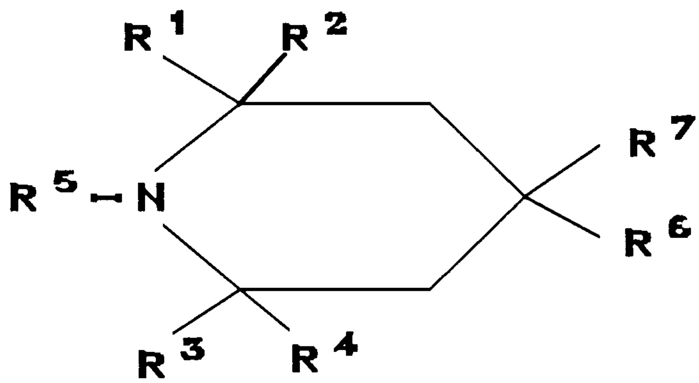

(II)

worin $R^1$, $R^2$, $R^3$, $R^4$, die gleich oder verschieden sein können,
= $(C_1-C_4)$-Alkyl, vorzugsweise Methyl, oder $(C_4-C_8)$-Cycloalkyl, vorzugsweise Cyclohexyl,
$R^5$ = H, $(C_1-C_{18})$-Alkyl, $(C_1-C_{18})$-Hydroxyalkyl, $(C_1-C_{18})$-Alkoxy oder $(C_1-C_{18})$-Acyloxy, vorzugsweise H,

$R^6$ und $R^7$, die gleich oder verschieden sein können und jeweils einer der Reste $R^6$ oder $R^7$ = H sein kann, einen einbindigen organischen Rest mit 1 bis 30 C-Atomen, der ein oder mehrere Heteroatome, die verschieden sein können, sowie Epoxidgruppen enthalten kann, oder

$R^6$ und $R^7$ gemeinsam mit dem C-Atom des Piperidinrings einen monocyclischen oder mehrfachcyclischen Rest mit bis zu 60 C-Atomen, der verzweigt sein kann und ein oder mehrere Heteroatome, die verschieden sein können, sowie Epoxidgruppen enthalten kann, bedeutet, ferner polymere oder copolymere Formen von Verbindungen der Formel II,

oder Costabilisatoren vorzugsweise des Typs

b) Stickstoffhaltige Verbindungen aus der Gruppe aliphatische Carbonsäurehydrazide bzw. Dicarbonsäuredihydrazide, vorzugsweise mit 2 bis 12 C-Atomen, insbesondere Adipinsäuredihydrazid, besonders bevorzugt Essigsäurehydrazid,

oder Costabilisatoren vorzugsweise des Typs

c) Schwefelhaltige Verbindungen aus der Gruppe Di-$(C_4-C_{18})$alkyl-sulfide und -disulfide, vorzugsweise Di-$(C_8-C_{12})$alkyl-sulfide und -disulfide, Thiozinnverbindungen der Formel $R_xSn(-S-CH_2-COOR)_y$, wobei x + y = 4, x, y = 1 bis 3, vorzugsweise x, y = 2, und R = $(C_1-C_{18})$-Alkyl, vorzugsweise $(C_8-C_{12})$-Alkyl, insbesondere Oktyl, bedeuten, Di-$(C_1-C_{18})$alkylthiodipropionate, vorzugsweise Di-$(C_8-C_{14})$alkylthiodipropionate, insbesondere Dilaurylthiodipropionat,

oder Costabilisatoren vorzugsweise des Typs

d) Phosphorhaltige Verbindungen aus der Gruppe der hydrolysebeständigen Phosphite, vorzugsweise Alkylarylphosphite, insbesondere Tris-(2,4-ditert.-butylphenyl)-phosphit,

oder Mischungen von Costabilisatoren aus Verbindungen der Typen a) bis d), und gegebenenfalls außerdem

e) Lichtstabilisatoren, vorzugsweise UV-Stabilisatoren, insbesondere Benzotriazolderivate,

sowie gegebenenfalls

f) Weichmacher, weitere übliche Stabilisatoren, übliche Antihaftmittel und übliche Zusatzstoffe

enthalten.

**2.** Polyvinylbutyrale nach Anspruch 1, dadurch gekennezichnet, daß der Gehalt an phenolischen Stabilisatoren der Formel I 0,05 bis 0,8 Gew.-%, vorzugsweise 0,07 bis bis 0,5 Gew.-%, insbesondere 0,1 bis 0,3 Gew.-%, bezogen auf den PVB + Weichmacher-Anteil, beträgt.

**3.** Polyvinylbutyrale nach Anspruch 1 oder 2, dadurch gekennzeichnet, daß der Gehalt an synergistisch wirkenden Costabilisatoren der Typen a) bis d) 0,01 bis 0,5 Gew.-%, vorzugsweise 0,1 bis 0,4 Gew.-%,

und die Summe aller Stabilisatoren der Formel I und aller Costabilisatoren zusammen ≦ 0,8 Gew.-%, bezogen auf den PVB + Weichmacher-Anteil, beträgt, wobei das Gewichtsverhältnis der Stabilisatoren der Formel I zur Summe der Costabilisatoren im Bereich von 90 : 10 bis 20 : 80 liegt.

**4.** Polyvinylbutyrale nach einem oder mehreren der Ansprüche 1 bis 3, dadurch gekennzeichnet, daß der Weichmachergehalt 20 bis 50 Gew.-%, vorzugsweise 23 bis 30 Gew.-%, bezogen auf den PVB + Weichmacher-Anteil, beträgt.

**5.** Polyvinylbutyrale nach einem oder mehreren der Ansprüche 1 bis 4, dadurch gekennzeichnet, daß sie als phenolischen Stabilisator der Formel I Bis-[3,3-bis-(4'-hydroxy-3'-tert.butylphenyl)butansäure]-glykolester enthalten.

**6.** Polyvinylbutyrale nach einem oder mehreren der Ansprüche 1 bis 5, dadurch gekennzeichnet, daß sie als Costabilisatoren Verbindungen der Formel II oder deren polymere oder copolymere Formen enthalten.

**7.** Polyvinylbutyrale nach einem oder mehreren der Ansprüche 1 bis 6, dadurch gekennzeichnet, daß sie als Costabilisatoren, einzeln oder als Gemisch, Verbindungen aus der Gruppe polymerisiertes 2,2,4,4-Tetramethyl-7-oxa-3,20-diaza-20-(2,3-epoxipropyl)-dispiro[5.1.11.2]-heneicosan-21-on, Adipinsäuredihydrazid, Essigsäurehydrazid, Dilaurylthiodipropionat und Tris(2,4-ditert.butylphenyl)-phosphit enthalten.

**8.** Polyvinylbutyrale nach einem oder mehreren der Ansprüche 1 bis 7, dadurch gekennzeichnet, daß die PVB-e 17 bis 29 Gew.-%, vorzugsweise 18,5 bis 24 Gew.-%, insbesondere 19 bis 22 Gew.-%, Vinylalkoholeinheiten enthalten und die Viskosität der PVB-e in 5 gew.-%igen ethanolischen Lösungen, gemessen nach DIN 53015 bei 23 °C, im Bereich von 10 bis 200 mPa.s, vorzugsweise 50 bis 100 mPa.s, liegt.

**9.** Polyvinylbutyrale nach einem oder mehreren der Ansprüche 1 bis 8, dadurch gekennzeichnet, daß sie als Weichmacher Diester von aliphatischen Polyätherdiolen bzw. -polyolen mit aliphatischen Carbonsäuren oder Diester von aliphatischen oder aromatischen Dicarbonsäuren mit aliphatischen Alkoholen enthalten.

**10.** Polyvinylbutyrale nach einem oder mehreren der Ansprüche 1 bis 9, dadurch gekennzeichnet, daß sie als weichmacherhaltige Folien von vorzugsweise 0,2 bis 2 mm Dicke vorliegen und gegebenenfalls als weitere Zusatzstoffe 0,001 bis 0,1 Gew.-% Alkalihydroxid oder ein alkalisch reagierendes Alkalisalz, 0,001 bis 0,2 Gew.-% Antihaftmittel aus der Gruppe Alkali- oder Magnesiumsalze von Carbonsäuren oder Dicarbonsäuren, Magnesiumacetylacetonat, Silane oder Siloxane und übliche Lichtstabilisatoren, vorzugsweise Benzotriazolderivate, enthalten.

**11.** Verfahren zur Herstellung von Polyvinylbutyralen (PVB-en) nach einem oder mehreren der Ansprüche 1 bis 10, dadurch gekennzeichnet, daß man die PVB-e durch Acetalisierung von Polyvinylalkoholen mit Butyraldehyd in wäßriger Lösung unter Säurekatalyse herstellt und gegebenenfalls die erfindungsgemäßen Stabilisatoren und gegebenenfalls Costabilisatoren bei der Acetalisierungsreaktion, vorzugsweise gelöst in Butyraldehyd, zusetzt, das PVB in üblicher Weise isoliert, mit Weichmacher plastifiziert, dabei gegebenenfalls erfindungsgemäße Stabilisatoren und gegebenenfalls Costabilisatoren sowie weitere übliche Zusatzstoffe und Lichtstabilisatoren einmischt und gegebenenfalls die stabilisierte und plastifizierte PVB-Formmasse im Extruder, vorzugsweise bei Temperaturen von 140 bis 250 °C, thermoplastisch verformt, vorzugsweise unter Herstellung von 0,2 bis 2 mm dicken weichmacherhaltigen Folien.

**12.** Verwendung von wirksam stabilisierten weichmacherhaltigen Polyvinylbutyralfolien nach einem oder mehreren der Ansprüche 1 bis 10 oder hergestellt nach Anspruch 11, als Zwischenlagerfolien in bzw. zur Herstellung von Verbundgläsern bzw. Glasverbunden mit verbesserten optischen Eigenschaften.

**13.** Verbundgläser aus silikatischen Glasscheiben mit Zwischenlagenfolien aus plastifiziertem PVB, wobei die Zwischenlagenfolien aus wirksam stabilisiertem weichmacherhaltigem PVB nach einem oder mehreren der Ansprüche 1 bis 11 bestehen.

**14.** Verbundgläser nach Anspruch 13 in Form von Fahrzeugscheiben, Schiffsglasscheiben, Flugzeugglasscheiben, Architekturglasscheiben für den Bausektor und Panzerglasscheiben.

Europäisches Patentamt

# EUROPÄISCHER RECHERCHENBERICHT

Nummer der Anmeldung

EP 93 10 7305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-A-2 208 167 (HOECHST AG)<br>* Beispiel 1 *<br>* Ansprüche 1,4 *<br>--- | 1,12 | C08K5/13<br>C08L29/14<br>C08J5/18<br>C03C27/12 |
| A | EP-A-0 324 106 (HOECHST AG)<br>* Anspruch 1 *<br>--- | 1 | |
| A | DE-A-3 228 076 (HOECHST AG)<br>* Beispiel 5 *<br>* Ansprüche 1-2 *<br>----- | 11 | |
| | | | **RECHERCHIERTE SACHGEBIETE (Int. Cl.5 )** |
| | | | C08K<br>C08L<br>C08J<br>C03C |

Der vorliegende Recherchenbericht wurde für alle Patentansprüche erstellt

| Recherchenort | Abschlußdatum der Recherche | Prüfer |
|---|---|---|
| DEN HAAG | 04 AUGUST 1993 | SIEMENS T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument